Europäisches Patentamt

European Patent Office

Office européen des brevets

(11) Veröffentlichungsnummer: **0 271 827 B1**

## EUROPÄISCHE PATENTSCHRIFT

(45) Veröffentlichungstag der Patentschrift: **23.06.93**

(21) Anmeldenummer: **87118305.9**

(22) Anmeldetag: **10.12.87**

(51) Int. Cl.⁵: **G01K 1/02**, G01K 7/24

(54) **Temperaturmessvorrichtung.**

(30) Priorität: **16.12.86 DE 3642861**

(43) Veröffentlichungstag der Anmeldung:
**22.06.88 Patentblatt 88/25**

(45) Bekanntmachung des Hinweises auf die
Patenterteilung:
**23.06.93 Patentblatt 93/25**

(84) Benannte Vertragsstaaten:
**DE FR GB IT**

(56) Entgegenhaltungen:
**DE-A- 2 753 871**
**US-A- 3 906 391**

**PATENT ABSTRACTS OF JAPAN, Band 7, Nr.
168 (P-212)[1313], 23. Juli 1983;& JP-A-58 73
830**

(73) Patentinhaber: **DIEHL GMBH & CO.**
**Stephanstrasse 49**
**W-8500 Nürnberg(DE)**

(72) Erfinder: **Stürzl, Wilhelm**
**Wiesenstrasse 12**
**W-8501 Winkelhaid(DE)**
Erfinder: **Grundl, Peter**
**Niendorfstrasse 12**
**W-8520 Erlangen(DE)**
Erfinder: **Grasser, Hans**
**Brühlstrasse 3**
**W-8501 Eckental(DE)**

EP 0 271 827 B1

Rank Xerox (UK) Business Services
(3. 10 / 3.6 / 3.3. 1)

## Beschreibung

Die Erfindung betrifft eine Temperaturmeßvorrichtung, die in einem Mikrocomputer mit einer Analog-Digital-Wandlung ein temperaturabhängiges Signal erzeugt, wobei ein Ladekondensator in Reihe mit einem Vergleichswiderstand und einem hierzu parallel angeordneten temperaturabhängigen Widerstand liegt, vermittels derer eine Meßzeit und eine Referenzzeit erzeugbar sind und aus dem Vergleich dieser Zeiten ein der Meßtemperatur zugeordnetes Digitalsignal ableitbar ist.

Analog-Digital-Wandlerschaltungen sind beispielsweise in der Literaturstelle "Halbleiter-Schaltungstechnik / U. Tietze, Ch. Schenk - 5. überarbeitete Auflage - Berlin, Heidelberg, New York; Springer, 1980, Seite 661 ff angegeben. Dort wird eine Eingangsspannung während einer bestimmten Zeit integriert. Anschließend wird eine Vergleichsspannung umgekehrten Vorzeichens an den Integrator gelegt und es wird die bis zum Nulldurchgang verstreichende Zeit gemessen. Hierbei läßt sich eine hohe Meßgenauigkeit erreichen.

Aus der DE-A-2 753 871 ist ferner eine Temperaturmeßvorrichtung bekanntgeworden, welche einen Bezugsoszillator und einen astabilen Multivibrator aufweist, bei welch letzterem am Ausgang Impulse unterschiedlicher Frequenz erzeugt werden, abhängig davon, ob ein Umschalter im Multivibrator auf einen frequenzbestinmenden temperaturabhängigen Widerstand oder auf einen frequenzbestimmenden Vergleichswiderstand umschaltet. Die Impulsfolgen am Ausgang werden durch eine logische Schaltung einem Zähler sowie einem nachgeschalteten Rechner zur Auswertung zugeführt.

Aus der EP 0 103 183 A3 ist eine Temperaturmeßvorrichtung bekanntgeworden, bei welcher ein Ladekondensator wechselweise über einen temperaturabhängigen Widerstand oder einen Referenzwiderstand aufgeladen werden kann. Dieser Kondensator und der temperaturabhängige Widerstand bzw. der Vergleichswiderstand sind Teil eines Oszillators, welcher mit der Zeitkonstante RC der beiden Bauelemente schwingt. Die Ausgangsimpulse des Oszillators werden in einer Zählschaltung gezählt und zwischengespeichert. Die Zählerstände der Vergleichs-Frequenz bzw. der temperaturabhängigen Frequenz werden miteinander verglichen und ein entsprechendes Ausgangssignal erzeugt.

Demgegenüber ist es Aufgabe der Erfindung, eine Temperaturmeßvorrichtung anzugeben, mit der ein digitales Meßtemperatursignal in besonders einfacher Weise erzeugbar ist.

Erfindungsgemäß ist diese Aufgabe dadurch gelöst, daß von dem Mikrocomputer gesteuerte Schalter (S1,S2) zur wechselweisen Aufladung des Kondensators (C) dienen, der mit einem Schwellwertelement (3) verbunden ist, welches bei einer vorbestimmten einzigen Schwellspannung ein Auswertesignal für den Mikrocomputer erzeugt, wobei die vom Mikrocomputer erfaßten unterschiedlichen Aufladezeiten des Kondensators das Maß für die Temperaturmessung bilden

Durch das bei jedem Meßvorgang zum Zwecke des Vergleichs erfolgende Laden des Ladekondensators ist erreicht, daß Bauteiltoleranzen des Ladekondensators und dessen Abhängigkeit von der Umgebungstemperatur sich nicht auf das Meßergebnis auswirken.

Auch Änderungen der Betriebsspannung oder der Schwellwertspannung beeinflussen das Meßergebnis nicht.

Mit der beschriebenen Schaltungsanordnung ist eine hohe Meßgenauigkeit zu erreichen. Günstig dabei ist insbesondere, daß auch bei hohen Umgebungstemperaturen die Meßgenauigkeit erhalten bleibt. Dies wirkt sich insbesondere bei einer Herdschaltuhr, mit der eine Temperaturmeßeinrichtung integriert ist, günstig aus.

Vorteilhafte Ausgestaltungen der Erfindung ergeben sich aus den Unteransprüchen und der folgenden Beschreibung eines Ausführungsbeispiels. In der Zeichnung zeigen:

Figur 1 ein Schaltbild der Schaltungsanordnung,

Figur 2 den Verlauf des Meßwiderstandes in Abhängigkeit von der Meßtemperatur und

Figur 3 die Kondensator-Ladezeit in Abhängigkeit von der Meßtemperatur.

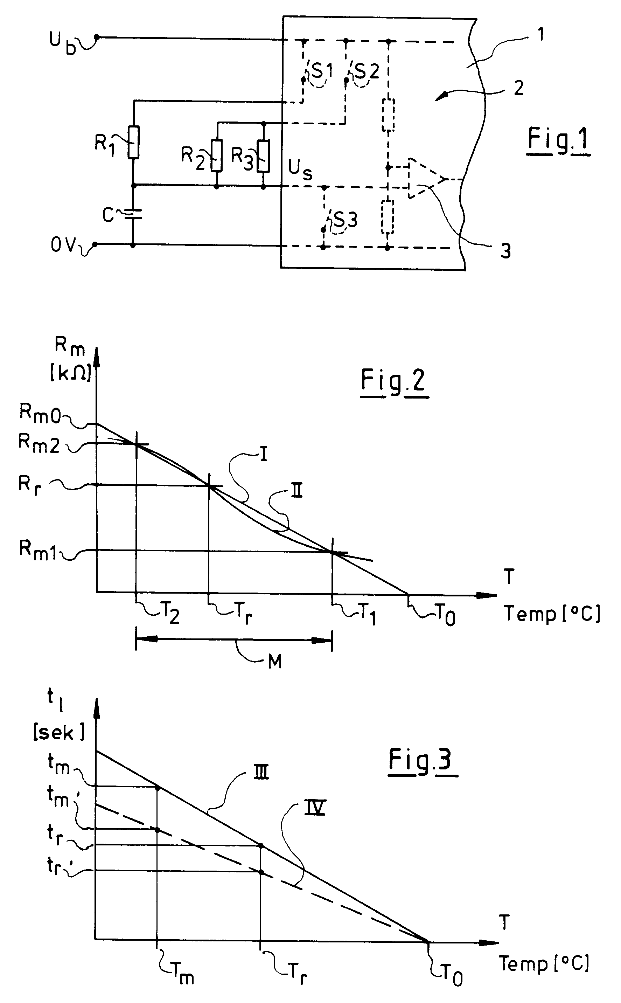

Ein Mikrocomputer(1) mit Analog/Digital-Wandlung beinhaltet in einem Schaltungsteil(2) Schalter(S1,S2,S3) sowie einen Schwellwertschalter(3) mit Schmitt-Trigger-Eigenschaften (vgl. Fig.1).

Über den Schalter(S1) und einen Vergleichswiderstand(R1) liegt ein Kondensator(C) an der Betriebsspannung Ub. Parallel zur Reihenschaltung des Schalters(S1) und des Widerstands(R1) liegt die Reihenschaltung des Schalters(S2) und die Parallelschaltung eines Parallelwiderstandes(R2) und eines NTC-Widerstandes(R3). Parallel zum Kondensator(C) liegt der weitere Schalter(S3).

Am einen Eingang des Schwellwertschalters(3) liegt der Kondensator(C). Die Schalter(S1,S2,S3) sind von dem Mikrocomputer(1) so gesteuert, daß immer nur einer der Schalter geschlossen ist. Die Schalter werden für jeden Meßvorgang in der Reihenfolge(S1,S3,S2,S3) geschlossen.

Die Arbeitsweise der beschriebenen Schaltung ist etwa folgende:

Durch Schließen des Schalters(S3) wird der Kondensator(C) entladen. Danach wird der Schalter(S3) geöffnet und der Schalter(S1) wird geschlossen. Der Kondensator(C) lädt sich dabei über den Vergleichswiderstand(R1) auf. Ist am Kcndensator(C) ein Spannungsschwellwert Us erreicht, dann schaltet der Schwellwertschalter(3) um. Die Ladezeit tr für diesen Ladevorgang wird im Mikrocomputer(1) dadurch gemessen, daß er mit seiner internen Taktfrequenz die jeweilige Impulsbreite der Ladezeiten tr auszählt. Sie beträgt:

$$tr = -R1 \; C \; \ln(Ub-Us)/Ub$$

Anschließend wird der Schalter(S1) geöffnet und der Schalter(S3) wird geschlossen, wodurch der Kondensator(C) entladen wird. Danach wird der Schalter(S3) wieder geöffnet und der Schalter(S2) wird geschlossen. Der Kondensator(C) wird dann über die Parallelschaltung der Widerstände(R2,R3) erneut aufgeladen.

Der NTC-Widerstand(R3) hat eine nicht lineare Temperaturkennlinie. Um diese zu linearisieren, ist ihm der Widerstand(R2) parallelgeschaltet. Die Parallelschaltung hat den Widerstandswert Rm, wobei

$$Rm = R3 \; R2/(R3 + R2).$$

Figur 2 zeigt in der Linie I den linearisierten Verlauf des Meßwiderstandes Rm. In der Linie II ist der tatsächliche, temperaturabhängige Verlauf des Widerstands Rm gezeigt.

Ist der Kondensator(C) über den Widerstand Rm wieder auf den Spannungsschwellwert Us aufgeladen, dann wird die hierfür nötige Zeit tm ermittelt. Diese beträgt:

$$tm = -Rm \; C \; \ln(Ub - Us)/Ub.$$

Es ergibt sich damit

$$Rm = R1 \; tm/tr.$$

Dies zeigt, daß durch Festlegung des Wertes des Widerstands(R1) und der Kapazität des Kondensators(C), die die Zeit tr bestimmt, Rm proportional zu tm ist. Bei jedem Meßvorgang wird tr erneut gemessen. Bauteiltoleranzen und Temperaturabhängigkeiten des Kondensators(C) bleiben damit ohne Einfluß auf das Meßergebnis. Ersichtlich gehen Schwankungen der Betriebsspannung Ub oder des Spannungsschwellwerts Us nicht in das Ergebnis ein, bzw. heben sich auf.

Wie ausgeführt ist der Meßwiderstand Rm der gemessenen Zeit tm proportional. Entsprechend der Kurve I der Figur 2 hängt der Meßwiderstand Rm in folgender Weise von der Temperatur T ab:

$$Rm = Rm0 + T \; (Rm2 - Rm1)/(T2 - T1) = Rm0 + s \; T.$$

Dabei ist T2 die untere Temperatur des Meßbereichs und T1 die obere Temperatur des Meßbereichs M. Rm2 und Rm1 ist der jeweils den Temperaturen T1,T2 zugeordnete Widerstandswert. Rm0 ist der Schnittpunkt der lirearisierten Kurve I mit der Widerstandsachse. s ist die negative Steigung der linearisierten Kurve. T0 ist der Schnittpunkt der linearisierten Kurve mit der Temperaturachse. Bei T0 ist Rm gleich Null. Es gilt:

$$T0 = Rm0/s.$$

Im Schnittpunkt der linearisierten Kurve I und des tatsächlichen Kurvenverlaufs II ergibt sich die höchste Meßgenauigkeit. Dort herrscht die Temperatur Tr bei dem Widerstand Rr. Der Vergleichswiderstand(R1) wird so gewählt, daß R1 = Rr. Es ist also:

$$Rr = Rm0 + s \; Tr.$$

Die Ladezeiten tl des Kondensators(C) stehen demnach in direktem Zusammenhang mit den Widerstandswerten Rm. Somit läßt sich anstelle von Rm die Ladezeit tl des Kodensators(C) setzen (vgl. Figur 3, Kurve III). Es gilt die Beziehung:

$$tm/tr = (T0 - Tm)/(T0 - Tr).$$

Daraus ergibt sich:

$$Tm = T0 - tm \; (T0 - Tr)/tr,$$

wobei T0 und Tr Konstante darstellen. Die jeweilige Meßtemperatur Tm ergibt sich unter Berücksichtigung der Konstanten T0,Tr durch die Messung der Ladezeiten tm,tr.

Der Ladekondensator(C) soll so groß gewählt werden, daß eine genügende Auflösung der Analogwerte in Digitalwerte erreicht wird. Der Kondensator(C) soll einen kleinen Leckstrom aufweisen. An seine Toleranz und Temperaturkonstanz sind keine besonderen Anforderungen gestellt.

Kurve IV in Figur 3 zeigt den Ladezeitverlauf in Abhängigkeit von der Temperatur bei maximaler Toleranz des Kapazitätenwertes des Kondensators(C). Er ergibt sich hieraus:

$$tm/tr = tm'/tr' = (T0 - Tm)/(T0 - Tr).$$

Dies zeigt, daß sich Toleranzen der Kapazität nicht auf das Meßergebnis auswirken.

Günstig ist bei der beschriebenen Schaltungsanordnung, daß sie auch bei hohen Umgebungstemperaturen einsetzbar ist. Der Bauteilaufwand ist gering. Ein Abgleich ist nicht erforderlich. Der Vergleichswiderstand(R1) stellt ein billiges Referenzelement dar.

In weiterer Ausgestaltung der Erfindung ist es auch möglich, mehr als die beschriebene, durch den Widerstand (R3) gebildete, eine Meßstelle vorzusehen.

## Patentansprüche

1. Temperaturmeßvorrichtung, die in einem Mikrocomputer mit einer Analog-Digital-Wandlung ein temperaturabhängiges Signal erzeugt, wobei ein Ladekondensator in Reihe mit einem Vergleichswiderstand und einem hierzu parallel angeordneten temperaturabhängigen Widerstand liegt, vermittels derer eine Meßzeit und eine Referenzzeit erzeugbar sind und aus dem Vergleich dieser Zeiten ein der Meßtemperatur zugeordnetes Digitalsignal ableitbar ist, dadurch gekennzeichnet, daß von dem Mikrocomputer gesteuerte Schalter (S1,S2) zur wechselweisen Aufladung des Kondensators (C) dienen, der mit einem Schwellwertelement (3) verbunden ist, welches bei einer vorbestimmten einzigen Schwellspannung ein Auswertesignal für den Mikrocomputer erzeugt, wobei die vom Mikrocomputer erfaßten unterschiedlichen Aufladezeiten des Kondensators das Maß für die Temperaturmessung bilden.

2. Temperaturmeßvorrichtung nach Anspruch 1, dadurch gekennzeichnet, daß der Vergleichswiderstand(R1) und der temperaturabhängige Widerstand(R2,R3) an die Betriebsspannung(Ub) anschaltbar sind.

3. Temperaturmeßvorrichtung Anspruch 1 oder 2, dadurch gekennzeichnet, daß als temperaturabhängiger Widerstand ein NTC-Widerstand(R3) mit einem parallelgeschalteten Widerstand(R2) vorgesehen ist.

4. Temperaturmeßvorrichtung nach einem der vorhergehenden Ansprüche, dadurch gekennzeichnet, daß der Vergleichswiderstand(R1) so gewählt ist, daß er gleich demjenigen Wert des temperaturabhängigen Widerstands(R2,R3) ist, bei dem die Temperatur mit größter Genauigkeit zu erfassen ist.

## Claims

1. A temperature measuring device which generates a temperature-dependent signal in a microcomputer having an analog/digital conversion, in which respect a charging capacitor lies in series with a comparator resistor and a temperature-dependent resistor which is arranged parallel thereto, by means of which a measuring time and a reference time can be generated and a digital signal which is associated with the measured temperature can be derived from the comparison of these times, characterised in that switches (51, 52) controlled by the microcomputer serve for the alternate charging-up of the capacitor (C), which is connected to a threshold-value element (30) which, at a predetermined single threshold voltage, generates an evaluation signal for the microcomputer, in which respect the different charging-up times of the capacitor which are detected by the microcomputer form the measure of the temperature measurement.

2. A temperature measuring device according to Claim 1, characterised in that the comparator resistor (R1) and the temperature-dependent resistor (R2, R3) can be connected up to the operating voltage (Ub).

3. A temperature measuring device according to Claim 1 or 2, characterised in that an NTC-resistor (R3) with a resistor (R2) connected in parallel is provided as the temperature-dependent resistor.

4. A temperature-measuring device according to one of the preceding claims, characterised in that the comparator resistor (R1) is selected in such a way that it is equal to that value of the temperature-dependent resistor (R2, R3) at which the temperature can be detected with the greatest accuracy.

## Revendications

1. Dispositif de mesure de température, produisant dans un micro-ordinateur équipé d'une conversion analogique-numérique un signal fonction de la température, où un condensateur de charge est placé en série avec une résistance de comparaison et une résistance, variant en fonction de la température, lui étant disposée en parallèle, dispositif au moyen duquel on peut produire un temps de mesure et un temps de référence et dériver à partir de la comparaison de ces temps un signal numérique, associé à la température mesurée, caractérisé en ce que des interrupteurs (S1,S2) commandés par le micro-ordinateur servent à opérer une charge alternée du condensateur (C) relié à un élément à valeur de seuil (3), produisant dans le cas d'une tension de seuil unique prédéterminée un signal d'exploitation destiné au micro-ordinateur, les différents temps de charge de condensateur, mesurés par le micro-ordinateur, formant la valeur quantitative de la mesure de température.

**2.** Dispositif de mesure de température selon la revendication 1, caractérisé en ce que la résistance de comparaison (R1) et la résistance variant en fonction de la température (R2,R3) sont susceptibles d'être commutées à la tension de fonctionnement (Ub).

**3.** Dispositif de mesure de température selon la revendication 1 ou 2, caractérisé en ce qu'une résistance de type NTC (R3) avec une résistance (R2) branchée en parallèle est prévue à titre de résistance variant en fonction de la température.

**4.** Dispositif de mesure de température selon l'une des revendications précédentes, caractérisé en ce que la résistance de comparaison (R1) est choisie telle qu'elle est égale à la valeur de la résistance variant en fonction de la température (R2,R3), de laquelle la température doit être mesurée avec une précision élevée.

Fig.1

Fig.2

Fig.3